# EUROPEAN PATENT APPLICATION

(11) **EP 2 320 366 A1**
(43) Date of publication of application: **11.05.2011**
(21) Application number: 10189869.0
(22) Date of filing: 03.11.2010
(51) Int. Cl.: G06Q 10/00

(54) **System and method for coupling a customer device to a servicing device**

(30) Priority: 06.11.2009 US 258742 P; 13.10.2010 US 903960
(71) Applicant: Sony Corporation, Tokyo 108-0075 (JP)
(72) Inventor: Hofrichter, Klaus, San Diego, CA 92128 (US); Brewer, Roger, Wildomar, CA 92595 (US); Pedlow, Leo, Ramona, CA 92065 (US)
(74) Representative: Scaddan, Gareth Casey

(57) **Abstract**

A system and methods are disclosed for connecting a customer device operated by a remote caller to a servicing device configured to be operated by a service agent, comprising. The system includes a first customer device comprising a servicing component within a graphical user interface, wherein the service component is configured to couple the first customer device to a remote server. The remote server includes a service application software configured to identify and communicate with the first customer device from among a plurality of customer devices, wherein the service application software is further configured to assign a unique customer ID to identify the first customer device from among the plurality of customer devices coupled to the remote server and display the customer ID on the graphical user interface of the first device. The service application software is further configured to allow the servicing device to link with first customer device identified by the customer ID.

## Description

### Field of the Invention

This invention pertains to a system and method for coupling a customer device to a servicing device. Embodiments of this invention relate generally to a remote customer service system, and more particularly to a server-based remote customer service system.

### Background of the Invention

After-sales service costs are a relevant cost factor for the overall profitability of a product. In the best case, there is no need for a customer to request services - and therefore no costs occur. However, if a customer feels the need to call a service center, it is important to reduce the duration of the call, avoid escalation to hither service tiers, and eventually address the issue to the satisfaction of the customer quickly. A quickly resolved service situation may actually improved customer loyalty and benefit the long term business. If there is a legit service need, it is important to understand the nature of the defect correctly, and possibly address the issue without a service technician visit in the customer's home. If a service in the field is required, it is good to provide advance information to the technician to ensure quick and effective issue resolution.

The direct business impact through cost savings can be substantial: Recent data shows, for example, that a substantial amount of TV repair attempts based on customer complains eventually turn out to be NPF: "No Problem Found." Each of these activities involve a technician visiting the customer's home, causing substantial total costs of with no tangible result. A significant portion of these costs can be saved through remote costumer service, assuming that a remote diagnostic and customer service can be achieved for network connected TVs or devices. Additional savings are possible when an actual issue can be either addressed remotely or when a technician can be informed in advance about the nature of the issue. The technician can bring the appropriate replacement parts at the first visit and has good information about the nature of the issue.

Accordingly embodiments of the present invention seek to provide an improved customer service system that provides a customer service agent access to various aspects of a consumer device while engaged with the consumer.

### Summary of the Invention

Various respective aspects and features of the invention are defined in the appended claims. Combinations of features from the dependent claims may be combined with features of the independent claims as appropriate and not merely as explicitly set out in the claims.

Embodiments of the present invention comprise systems and methods utilizing the Internet connection of networked consumer electronics to reduce after-sales customer service costs and increase customer satisfaction. The system enables a customer service agent to connect remotely to a device in the customer's home by setting up a connection to a service console. Using this connection, the customer service agent can inspect and manipulate device settings, perform measurements and receive data from the device. The customer's complaint can be either addressed right away, or detail information about the defect situation can be provided to a field agent in advance.

One embodiment of the invention is a system and methods for connecting a customer operated by a service agent, comprising. The system includes a first customer device comprising a servicing component within a graphical user interface (or other user interface), wherein the service component is configured to couple the first customer device to a remote server. The remote server includes a service application software configured to identify and communicate with the first customer device from among a plurality of customer devices, wherein the service application software is further configured to assign a unique customer ID to identify the first customer device from among the plurality of customer devices coupled to the remote server and display the customer ID on the graphical user interface of the first device. The service application software is further configured to allow the servicing device to link with first customer device identified by the customer ID.

Another embodiment is a method for coupling a customer device operated by a remote caller to a servicing device configured to be operated by a service agent. The method includes the steps of coupling a first customer device to a remote server, identifying the first customer device from among a plurality of customer devices, assigning a unique customer ID to identify the first customer device from among the plurality of customer devices coupled to the remote server, displaying the customer ID on a graphical user interface of the first device, and linking a servicing device operated by a service agent with the first customer device identified by the customer ID.

Another embodiment is a system for connecting a customer device operated by a remote caller to a servicing device configured to be operated by a service agent. The system includes a first customer device having a graphical user interface comprising a service component, and a remote server. The service component is configured to couple the first customer device to the remote server, which comprises service application software configured to identify and communicate with the first customer device from among a plurality of customer devices. The service application software comprises a database of product data relating to the plurality of devices, and is configured to allow a servicing device coupled to the remote server to remotely manipulate manufacturer settings of the first customer device according to said stored product data, and manipulate the manufacturer settings without use of the operating system of the device.

Further aspects and embodiments of the invention will be brought out in the following portions of the specification, wherein the detailed description is for the purpose of fully disposing example embodiments of the invention without placing limitations thereon.

### Brief Description of the Drawings

Embodiments of the invention will now be described with reference to the accompanying drawings, throughout which like parts are referred to by like references, and in which:
FIG. 1 is a schematic diagram of a customer service system in accordance with an embodiment of the present invention.
FIG. 2 illustrates a schematic diagram of the component connection interface for the customer service system of FIG. 1.
FIG. 3 is a flow diagram of a method for linking a consumer and consumer device to a service agent in accordance with an embodiment of the present invention.
FIG. 4 shows a schematic diagram showing the primary components of a server-based service application in accordance with an embodiment of the present invention.
FIG. 5 shows a schematic diagram showing the primary components of a device-based service application in accordance with an embodiment of the present invention.
FIG. 6 illustrates a device graphical user interface having a customer service connection in accordance with an embodiment of the present invention
FIG. 7 illustrates an exemplary graphical user interface for a service agent in accordance with an embodiment of the present invention.

### Description of the Example Embodiments

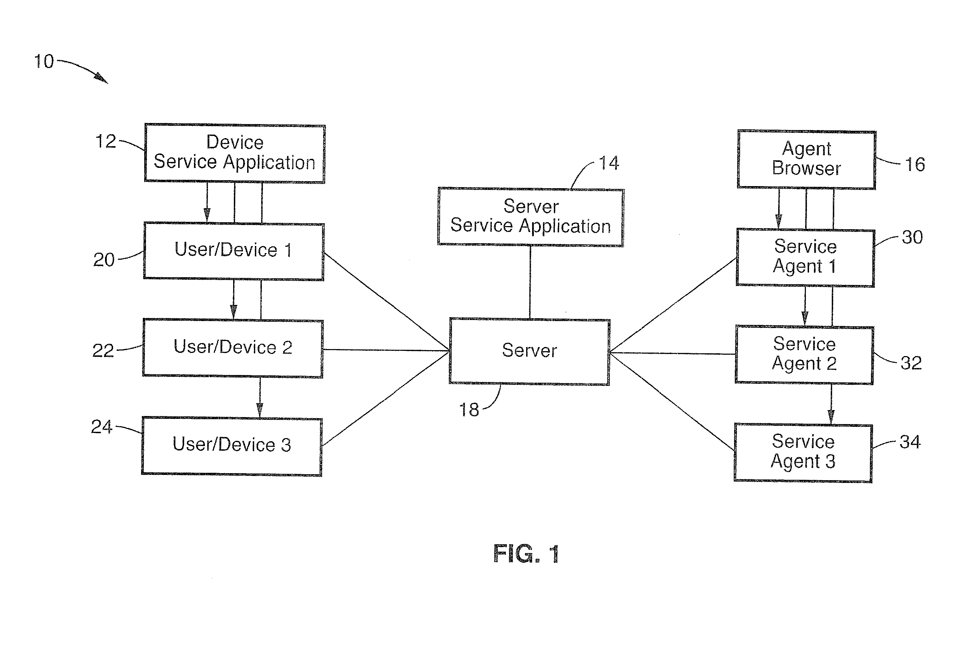

Referring more specifically to the drawings, for illustrative purposes an example embodiment of the present invention is shown in the apparatus generally shown in FIG. 1 through FIG. 7. It will be appreciated that the apparatus may vary as to configuration and as to details of the parts, and that the method may vary as to the specific steps and sequence, without departing from the basic concepts as disclosed herein.

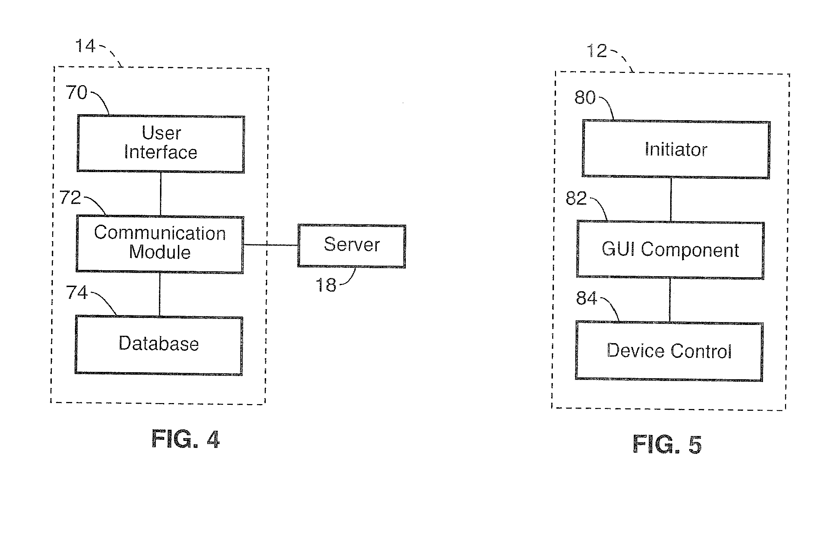

FIG. 1 is a schematic diagram of a customer service system 10 in accordance with an embodiment of the present invention. One or more users/devices 20, 22, 24 may individually connect to one of a plurality of service agents 30, 32, 34 via a server 18 comprising server based service application 14 (described in more detail below with respect to FIG. 4). User devices 20, 22, 24 may comprise any consumer electronics device or component capable of being coupled to a network, such as a TV, set top box, receiver, DVD player, game console, cell phone, computer, etc. Each of the user devices 20, 22, 24 preferably comprise a device service application 12 (described in more detail below with respect to FIG. 5) loaded into memory on the device. Service agents 30, 32, 34 may connect to the server via an established network, such as though a browser 16 coupled to the server 18 via an Internet connection.

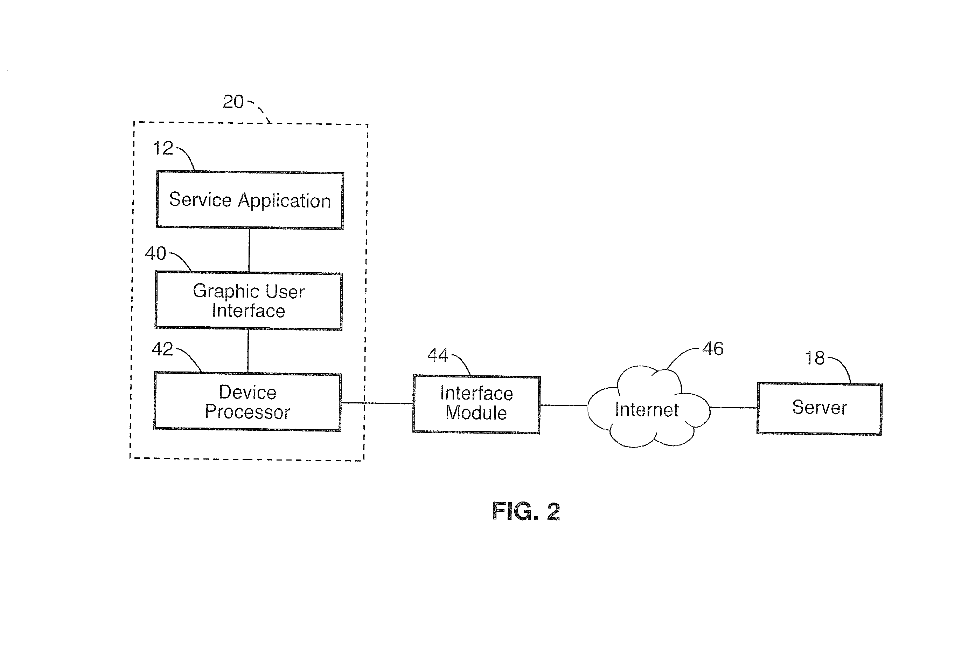

FIG. 2 illustrates a schematic diagram of the component connection interface for a device 20 to connect to the customer service system of FIG. 1. Device 20 preferably comprises service application 12 that is preferably integrated into the graphical user interface (GUI) 40 of the device. For purposes of this description, the embodiments are illustrated with respect to GUI 40. However, it is appreciated that the system may comprise and automated system that has no visible interface. For example, a self-servicing application is possible, where the customer answers to synthetic voice or other means if there are questions.

Device processor 42 is configured to process commands initiated by the service application 12 to communicate with a remote device (e.g. server 18) over a network such as the Internet 46. The device 20 preferably comprises an interface module 44 that allows the device to communicate with other devices such as server 18. In a preferred embodiment, the interface module 44 comprises a BRAVIA Internet Video (BIVL) module that may be an integrated or add-on component for the device 20. It is appreciated, however, that the use of the BIVL platform for the interface module 44 is merely exemplary, and that the interface module 44 may comprise any available interface or network connection in the art for providing IPTV or the like.

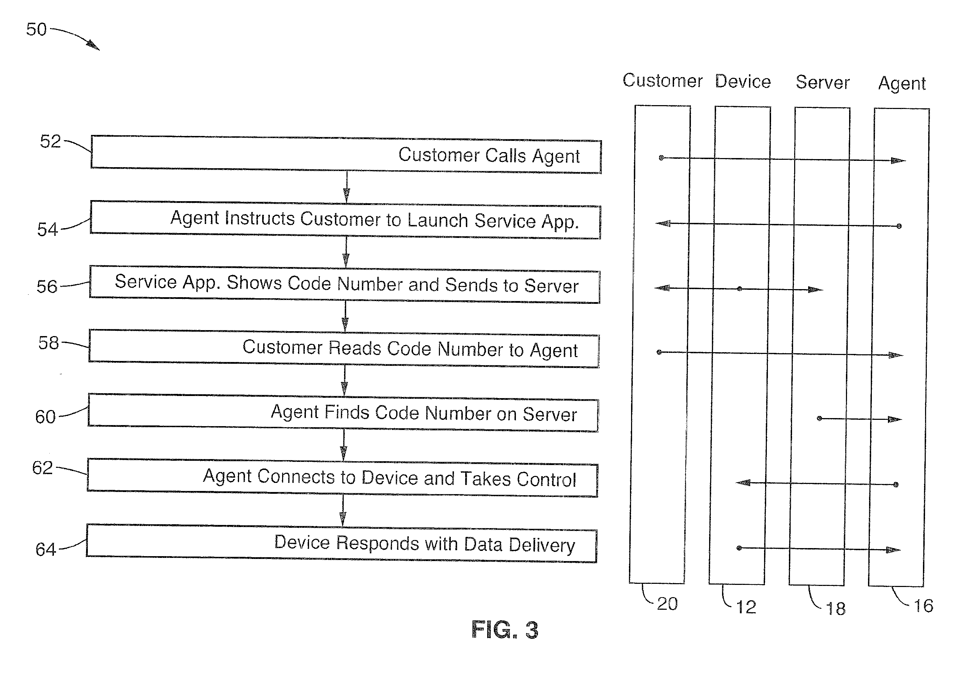

FIG. 3 is a flow diagram of a method 50 for linking a consumer and consumer device 20 to a service agent 30 in accordance with an embodiment of the present invention. In one embodiment, the system 10 utilizes the BIVL service infrastructure used for TV and may be configured couple to other devices that support the BIVL protocols.

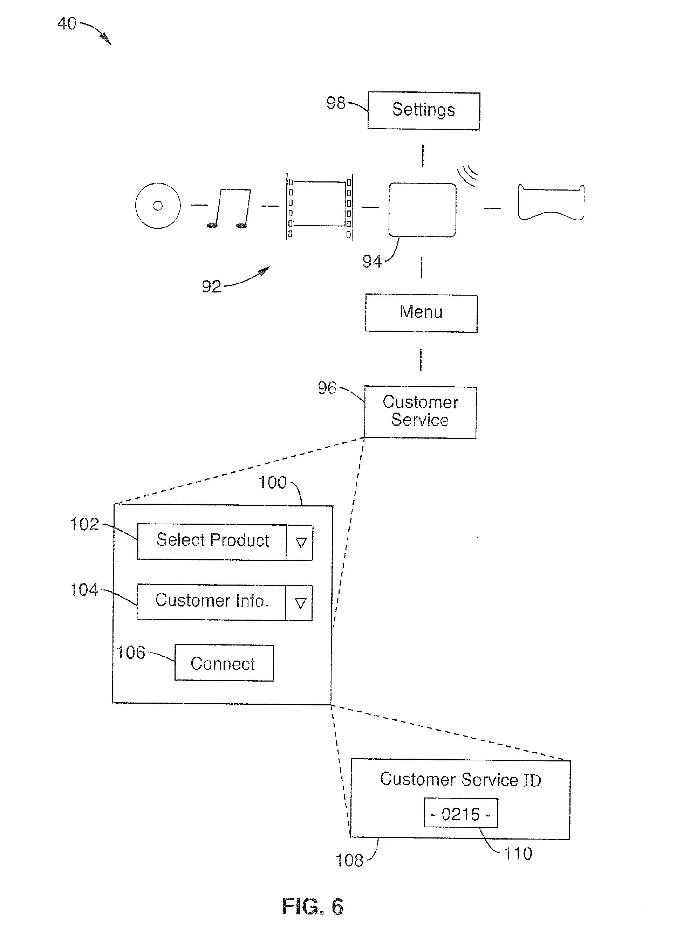

In a preferred embodiment, a customer arrives at a situation where the service center is desired, and initiates a call to the service center at step 52 (It is appreciated that this first step may be avoided altogether, or may comprise the customer initiating contact via the device service application 12 directly through server 18.) The service agent 30 may then ask the customer to activate a service mode at step 54 (i.e. select an icon in the GUI 90 (see FIG. 6) or launch the service application 12, which, for example, may comprise a Widget). By doing this, the device application 12 initiates a connection through the Internet 46 to the central server 18. The server application software 14 then generates a code number and sends the code to the customer device 20 for display (e.g. on a TV screen or the like). The server 18 and server service application 14 function to identify devices 20, 22, 24, and validates the device, in essence acting as a gatekeeper. Assuming a functional network configuration, there is no issue firewall or security issue, since step 54 and 56 are initiated by the customer device 20.

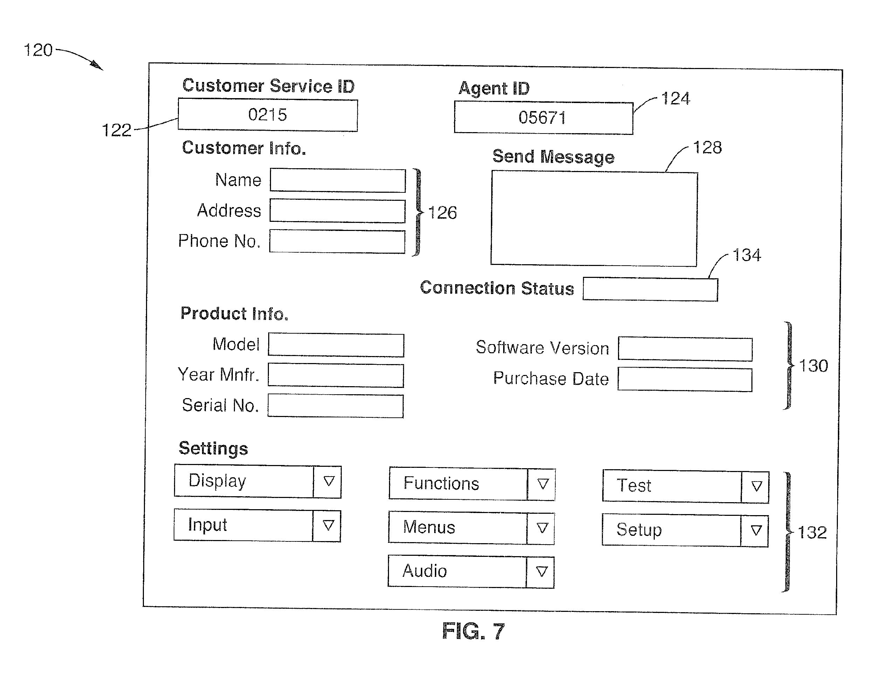

At step 58, the customer reads the identification code displayed on the device 20 or TV to the customer service agent 30, and the agent 30 can in turn identify the connected device 20 from among a plurality of devices listed on the service console (FIG. 7). This establishes the link between the device 20 that the caller is using and the agent 30 on the phone line with the caller.

It is appreciated that the connection between service agent 30 and connected customer device 20 may be initiated via a number of means. For example, rather than identify between customer devices, the service agent 30 may give the caller a transaction ID or service agent ID, which the user may then enter into a field on the (e.g. in screen 100 shown in FIG. 6 and described below) GUI 40 assigned by the device application 12. This code then gets forwarded to server 18, wherein application 14 then proceeds to link the device 20 to the specified agent device 30.

With the agent 30 now linked to the device 10, the agent has a connection to the device 20 or TV, and can inspect values (like SW version, usage parameters, signal strength, etc). It is also may retrieve screenshots, manipulate parameters, or initiate SW update to address the issue or retrieve information that would be helpful for a service technician.

FIG. 4 shows a schematic diagram showing the primary components of a server-based service application 14 in accordance with an embodiment of the present invention. The application 14 comprises a user interface 70 visible by the service agent 30 to view aspects about the user and/or user device 20 and manipulate aspects of the user device 20. The server application further comprises a communication module 72 that allows the server 18 to identify, link up to, and communicate with devices operated by agents 30, 32, 34, and customers 20, 22, 24. In one embodiment, communication module 70 may be compliant with, or part of BIVL protocol to establish exchanges between the device and the server. The BIVL infrastructure provides content services to the customers (like Amazon OnDemand, YouTube, or Yahoo Video), and may be configured to provide customer service agents 30 with detail information about the service quality (i.e. bandwidth), consumed services, and software versions deployed.

The server application 14 also comprises a database 74 that comprises data relating to possible consumer devices, such as factory settings, configurations, specifications etc. relating to specific devices and components such that when a particular device 20 is linked up and authenticated, the aspects about the device beneficial in servicing, repairing, troubleshooting, optimizing etc. are available to the agent 30 to assist in addressing the customer's needs. For example, the server may comprise instructions for identification of where in the memory or ROM of a device 20 that particular settings or functions are stored.

The service application 14 is configured to allow a service agent 30 to not only retrieve and monitor data with respect to the device 20, but also manipulate aspects about the device 20.

For example, service application 14 may be configured to provide the following functionality:
1) Retrieve service data like accumulated usage time of the device 20. The same information that is available to an on-site technician can be retrieved through the remote connection.
2) Retrieve screenshots, live video .or other aspects about the output of the device 20. A screenshot (or live video from the TV) can be streamed to the customer service agent 30 for inspection.
3) Retrieve and manipulate picture quality settings from the device 20. For example, picture quality settings (e.g. manufacturer settings such as size of screen, image color characteristics, etc.), can be reviewed and improved.
4) Provide or push reference content to the customer device 20 (e.g. ROM based adjustments to the display, test pictures or video, etc.), which may be used to optimize settings.
5) Provide remote tutorials such that certain features may be explained to the customer through the remote service.
6) Screen based communication such as text messaging to and from the customer.

It is important to note that the system 10 is generally not emulating the customer session, nor generally operating the device via the embedded user interface that the customer sees and uses. Rather, the system 12 operates in the "background" of the device 20 and interacts directly with the device 20 components/hardware/ROM, etc. For example, the system 10 would not manipulate and change the device via the GUI menu/settings viewed by the customer, but would bypass this interface to directly modify and/or evaluate device settings and configurations (e.g. which may be stored on ROM in the device 20). This allows the agent 30 to affect changes on the device 20 (e.g. factory settings, BIOS, etc.) that are generally not accessed from general system operation or GUI of the device 20. Data and settings of the device 20 may be retrieved or manipulated without the user seeing what is happening, or changing the current operation of the device 20 (e.g. the device may be displaying a video output to the consumer, simultaneously while the agent 30 is adjusting display settings). Thus, certain factory settings, that could harm the device 20 if inappropriately set, remain inaccessible to the user.

FIG. 5 shows a schematic diagram of the primary components of a device-based service application 12 in accordance with an embodiment of the present invention. The device service application 12 preferably comprises an initiator 80 that may be visually represented in GUI component 82 of the device 20. The initiator, when activated (e.g. by the consumer via device 20 controls and GUI 82), contacts the server 18 (which acts as the responder to the application 12) to affect linking of the device 20 and agent 30. The device service application 12 also comprises a device control module 84 that evaluates direction from the server service application 14 (e.g. commands stored in database 74) and applies the direction to a component or setting of the device 12.

FIG. 6 illustrates a device graphical user interface 40 having a customer service connection module 96 in accordance with an embodiment of the present invention. User interface 40 is shown as a cross media bar (XMB) 92 having a plurality of icons (e.g. settings icon 98) that may be toggled horizontally across the screen for selection to show further selectable options (e.g. icon 94) in a vertical orientation.

As shown in FIG. 6, the media bar 92 may comprise a customer service icon 96. Selection of customer service icon 96 may open a box, window or screen 100 that provides further options for then user. The user may initiate connection with the server by simply selecting the "connect" button 106. Alternatively, the screen 100 may prompt the user to enter in specified data from pull down menus or data entry fields For example, the user may be prompted to enter in the product information regarding the device 20 via drop down menu 102. In addition, the user may provide customer information in field 104. After completing the information, the user may then connect to the server 18 via the "connect" button 106. Upon connection, the entered information in fields 102 and 104 may then be automatically uploaded to the server 18 for later viewing from the service agent 30.

After connection to the server 18, the server will preferably assign a customer service ID 110 in screen or box 108. The number may comprise any identification that uniquely identifies the caller and caller's device 20 from among a plurality of caller devices (e.g. 20, 22, 24). The customer may then read off the number to the agent 30 so that the agent may connect to the caller's device 20 as detailed in the method 50 of FIG. 50.

It is appreciated that in some instances, it may be possible that the customer selects or launches the customer service application 12 prior to initiating a call to customer service (e.g. step 52). In this situation, the server may instruct the customer to dial a number on the screen to contact customer service, or may connect to an available agent 30, who then contacts the customer via a number provided in field 114. In an alternative embodiment, the service transaction may be performed without phone connection, e.g. via instant messaging or other texting options through GUI 40.

FIG. 7 illustrates an exemplary graphical user interface for a service console 120 available to a service agent 30 in accordance with an embodiment of the present invention. The customer service agents 30 can use the service console 120 to investigate the service utilization, connectivity and software version even without direct customer contact.

The console preferably comprises a plurality of fields such as customer service ID field 122. ID field 122 may correspond to the customer service ID 110 generated when the customer device 20 connects to the server 18 (see FIG. 6). The agent 30 may enter this number to connect to the customer device 20, with indicator 134 showing connection status. Once connected, various fields (e.g. custom info fields 126 and product information field may be auto-populated via detection of the device 20 (e.g. via the server application 14) and any prior registration of calls from the customer.

Alternatively, ID field 122 may comprise a unique call transaction number that is assigned randomly when a customer calls in. The agent may read customer service ID 122 to the customer, who then enters the number in a field available on screen 100 of the generated by the device application 12 (see FIG. 6). Upon entry of the ID field 122 (or the Agent ID 124), the server 18 Will link the customer device 12 to the service agent device 30.

These additional features allow the agent 30 to utilize the interactive connection between the device 20 and the server 18. Thus, more detail data can be retrieved, including screenshots or setup details, along with tools supporting manipulation of the settings and parameters of the device 20 or TV.

Once connected, the agent may communicate with the customer via instant/text messaging module 128, or send data/files directly to the customer device 20.

The agent may also look up or modify settings or functions on the device 20, or send reference content (e.g. video/audio, images, test patterns etc), via a plurality of buttons or pull-down menus 132. The device settings 132 are preferably coupled to the database 74 so that they are specific to the device 20 and are able to modify or reconfigure the device.

Significant costs may be saved by utilizing the remote customer service system 10 according to embodiments of the present invention: e.g. unnecessary visits in the customers' home can be reduced, services can be provided remotely, and on-site visits can be prepared well. Additionally, customer loyalty can be improved through effective and quick service.

Embodiments of the present invention are described with reference to flowchart illustrations of methods and systems according to embodiments of the invention. These methods and systems can also be implemented as computer program products. In this regard, each block or step of a flowchart, and combinations of blocks (and/or steps) in a flowchart, can be implemented by various means, such as hardware, firmware, and/or software including one or more computer program instructions embodied in computer-readable program code logic. As will be appreciated, any such computer program instructions may be loaded onto a computer, including without limitation a general purpose computer or special purpose computer, or other programmable processing apparatus to produce a machine, such that the computer program instructions which execute on the computer or other programmable processing apparatus create means for implementing the functions specified in the block(s) of the flowchart(s).

Accordingly, blocks of the flowcharts support combinations of means for performing the specified functions, combinations of steps for performing the specified functions, and computer program instructions, such as embodied in computer-readable program code logic means, for performing the specified functions. It will also be understood that each block of the flowchart illustrations, and combinations of blocks in the flowchart illustrations, can be implemented by special purpose hardware-based computer systems which perform the specified functions or steps, or combinations of special purpose hardware and computer-readable program code logic means.

Furthermore, these computer program instructions, such as embodied in computer-readable program code logic, may also be stored in a computer-readable memory that can direct a computer or other programmable processing apparatus to function in a particular manner, such that the instructions stored in the computer-readable memory produce an article of manufacture including instruction means which implement the function specified in the block(s) of the flowchart(s). The computer program instructions may also be loaded onto a computer or other programmable processing apparatus to cause a series of operational steps to be performed on the computer or other programmable processing apparatus to produce a computer-implemented process such that the instructions which execute on the computer or other programmable processing apparatus provide steps for implementing the functions specified in the block(s) of the flowchart(s).

As can be seen, therefore, the present invention includes the following example embodiments among others:
1. A system for connecting a customer device operated by a remote caller to a servicing device configured to be operated by a service agent, comprising: a first customer device; the first customer device comprising a graphical user interface comprising a service component; the service component configured to couple the first customer device to a remote server; the remoter server comprising service application software configured to identify and communicate with the first customer device from among a plurality of customer devices; the service application software further configured to assign a unique customer ID to identify the first customer device from among the plurality of customer devices coupled to the remote server and display the customer ID on the graphical user interface of the first device; wherein the service application software is configured to allow the servicing device to link with first customer device identified by the customer In
2. A system as recited in embodiment 1, wherein the service application software is configured to modify settings of the first customer device without use of the operating software of the first customer device.
3. A system as recited in embodiment 2, wherein the service application software is configured to modify factory settings of the first customer device that are not available from the operating system.
4. A system as recited in embodiment 3, wherein the factory settings are stored in memory on the device.
5. A system as recited in embodiment 1, wherein the service application software comprises a database, the database comprising product data relating to the plurality of devices; wherein the product data facilitates communication with the first customer device.
6. A system as recited in embodiment 5, wherein the product data comprises manufacturer settings relating to the first customer device.
7. A system as recited in embodiment 6, wherein the product data comprises locations of the manufacturer settings within memory of the first customer device.
8. A system as recited in embodiment 6, wherein the service application software comprises user interface that accesses the product data to allow the service agent to remotely manipulate the manufacturer settings through the remote server.
9. A system as recited in embodiment 1, wherein the service component is configured to retrieve and display the customer ID on the graphical user interface of the first.
10. A method for coupling a customer device operated by a remote caller to a servicing device configured to be operated by a service agent, comprising: coupling a first customer device to a remote server; identifying the first customer device from among a plurality of customer devices; assigning a unique customer ID to identify the first customer device from among the plurality of customer devices coupled to the remote server; displaying the customer ID on a graphical user interface of the first device; and linking a servicing device operated by a service agent with the first customer device identified by the customer ID.
11. A method as recited in embodiment 10, further comprising: modifying settings of the first customer device without manipulation of the operating system of the first customer device.
12. A method as recited in embodiment 11, wherein modifying settings comprises modifying factory settings of the first customer device that are not available from the operating system.
13. A method as recited in embodiment 12, wherein modifying settings comprises manipulating settings that are stored in memory on the first device.
14. A method as recited in embodiment 11, further comprising: retrieving product data relating to the plurality of devices; the product data comprising manufacturer settings relating to the first customer device; wherein modifying settings comprises modifying factory settings of the first customer device.
15. A method as recited in embodiment 11, wherein modifying settings comprises manipulating manufacturer settings from a service device through a connection with the remote server.
16. A method as recited in embodiment 1, wherein the remote caller calls the service agent prior to coupling the first customer device to a remote server; wherein the remote caller provides the customer ID displayed on a graphical user interface to the service agent; and wherein the service agent enters the customer ID to link the servicing device to the first customer device.
17. A system for connecting a customer device operated by a remote caller to a servicing device configured to be operated by a service agent, comprising: a first customer device; the first customer device comprising a graphical user interface comprising a service component; and a remote server; wherein the service component is configured to couple the first customer device to the remote server; the remoter server comprising service application software configured to identify and communicate with the first customer device from among a plurality of customer devices; wherein the service application software comprises a database comprising product data relating to the plurality of devices; wherein the service application software is configured to allow a servicing device coupled to the remote server to remotely manipulate manufacturer settings of the first customer device according to said stored product data; wherein the service application software is configured to manipulate the manufacturer settings without use of the operating system of the device.
18. A system as recited in embodiment 17, wherein the service application software is configured to assign a unique ID to a customer call relating to the first customer device; and wherein the service application software is configured to receive input of the unique ID from either the servicing device or the first customer device to link the servicing device to the first customer device.
19. A system as recited in embodiment 18, wherein the unique ID distinguishes the first customer device from among a plurality of customer devices coupled to the server.
20. A system as recited in embodiment 18, wherein the unique ID distinguishes the service agent from among a plurality of service agents couplet to the remote server.

Although the description above contains many details, these should not be construed as limiting the scope of the invention but as merely providing illustrations of some of the presently preferred embodiments of this invention. Therefore, it will be appreciated that the scope of the present invention fully encompasses other embodiments which may become obvious to those skilled in the art. In the appended claims, reference to an element in the singular is not intended to mean "one and only one" unless explicitly so stated, but rather "one or more." All structural and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the present invention, for it to be encompassed by the present claims. Furthermore, no element, component, or method step in the present disclosure is intended to be dedicated to the public regardless of whether the element, component, or method step is explicitly recited in the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for connecting a customer device operated by a remote caller to a servicing device operated by a service agent, comprising:
a first customer device;
the first customer device comprising a graphical user interface comprising a service component; and
a remote server;
wherein the service component is configured to couple the first customer device to the remote server;
the remoter server comprising service application software configured to identify and communicate with the first customer device from among a plurality of customer devices;
the service application software further configured to assign a unique customer ID to identify the first customer device from among the plurality of customer devices coupled to the remote server and display the customer ID on the graphical user interface of the first device;
wherein the service application software is configured to allow the servicing device to link with first customer device identified by the customer ID.

2. A system as recited in claim 1, wherein the service application software is configured to modify settings of the first customer device without use of the operating system of the first customer device.

3. A system as recited in claim 2, wherein the service application software is configured to modify factory settings of the first customer device that are not available from the operating system.

4. A system as recited in claim 3, wherein the factory settings are stored in memory on the device.

5. A system as recited in claim 1:
wherein the service application software comprises a database, the database comprising product data relating to the plurality of devices; and
wherein the product data facilitates communication with the first customer device.

6. A system as recited in claim 5, wherein the product data comprises manufacturer settings relating to the first customer device.

7. A system as recited in claim 6, wherein the product data comprises locations of the manufacturer settings within memory of the first customer device.

8. A system as recited in claim 6, wherein the service application software comprises user interface that accesses the product data to allow the service agent to remotely manipulate the manufacturer settings through the remote server.

9. A system as recited in claims 1, wherein the service component is configured to retrieve and display the customer ID on the graphical user interface of the first.

10. A method for coupling a customer device operated by a remote caller to a servicing device configured to be operated by a service agent, comprising:
coupling a first customer device to a remote server;
identifying the first customer device from among a plurality of customer devices;
assigning a unique customer ID to identify the first customer device from among the plurality of customer devices coupled to the remote server; and
displaying the customer ID on a graphical user interface of the first device;
linking a servicing device operated by a service agent with the first customer device identified by the customer ID.

11. A method as recited in claim 10, further comprising:
modifying settings of the first customer device without manipulation of the operating system of the first customer device.

12. A method as recited in claim 11, wherein modifying settings comprises modifying factory settings of the first customer device that are not available from the operating system.

13. A method as recited in claim 12, wherein modifying settings comprises manipulating settings that are stored in memory on the first device.

14. A method as recited in claim 11, further comprising:
retrieving product data relating to the plurality of devices;
the product data comprising manufacturer settings relating to the first customer device;
wherein modifying settings comprises modifying factory settings of the first customer device.

15. A method as recited in claim 1 wherein the remote caller calls the service agent prior to coupling the first customer device to a remote server;
wherein the remote caller provides the customer ID displayed on a graphical user interface to the service agent; and
wherein the service agent enters the customer ID to link the servicing device to the first customer device.
